# EUROPEAN PATENT APPLICATION

(11) **EP 1 903 827 A2**
(43) Date of publication of application: **26.03.2008**
(21) Application number: 07115345.6
(22) Date of filing: 30.08.2007
(51) Int. Cl.: H04Q 7/38

(54) **Reconnection control method and device for mobile terminal**

(30) Priority: 22.09.2006 JP 2006257049
(71) Applicant: Fujitsu Ltd., Kawasaki-shi, Kanagawa 211-8588 (JP)
(72) Inventor: Shigaki, Koki c/o Fujitsu Kyushu Network Technologies Limited,, Fukuoka-shi, Fukuoka 814-8588 (JP); Kondou, Takako c/o Fujitsu Kyushu Network Technologies Limited,, Fukuoka-shi, Fukuoka 814-8588 (JP); Satou, Akihiro c/o Fujitsu Kyushu Network Technologies Limited,, Fukuoka-shi, Fukuoka 814-8588 (JP)
(74) Representative: Wilding, Frances Ward

(57) **Abstract**

In a reconnection control method and device for mobile terminal which can automatically change an optimum reconnection time according to various states, a handover history of a mobile terminal is managed, a next handover destination cell of the mobile terminal is predicted from the handover history. When it is detected that the predicted handover destination cell corresponds to a radio wave-faulted area, a predetermined reconnection time for the mobile terminal is changed. When the radio wave-faulted area is a non-service area where a cell is not mounted, the predetermined reconnection time is reduced. When the radio wave-faulted area is a temporary radio wave-faulted area, the predetermined reconnection time is extended. When the radio wave faulted area is a congestion area, the predetermined reconnection time is reduced.

## Description

### Background of the Invention

### Field of the Invention

The present invention relates to a reconnection control method and device for mobile terminal, and in particular to a reconnection control method and device for mobile terminal in a radio network control apparatus in a mobile radio system.

### Description of the Related Art

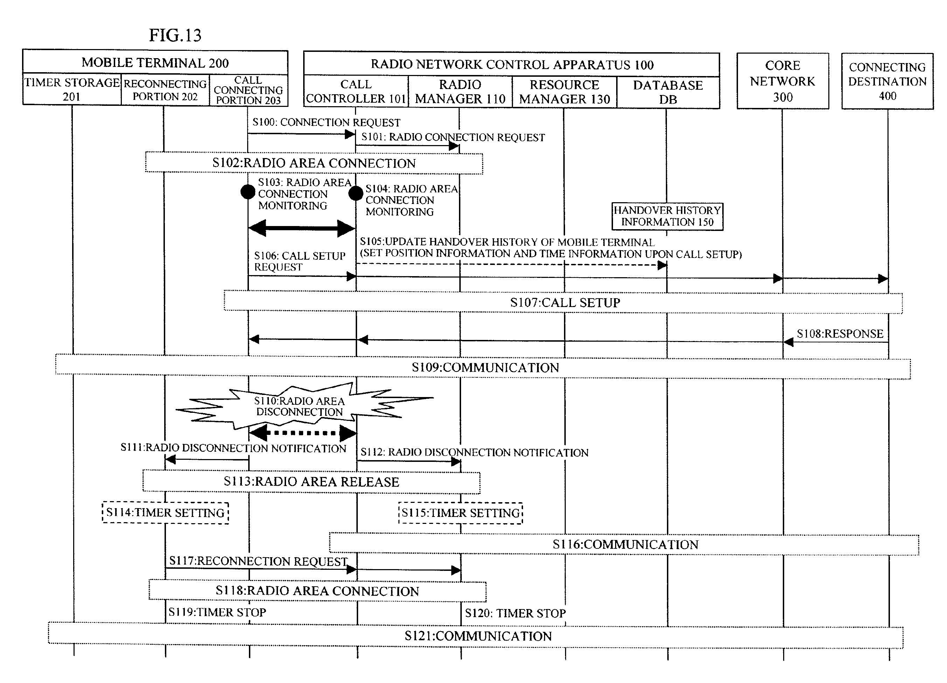

Fig.13 shows a sequence from a call setup to a reconnection generally known in the prior art of a mobile radio system. In this sequence, when a mobile terminal (user equipment) 200 firstly moves to a moving destination cell (handover destination cell), a connection request (at step S100) is provided to a radio network control apparatus 100 from a call controller 203 in the mobile terminal 200.

In the radio network control apparatus 100, a call controller 101 receives the connection request, and then transmits it (at step S101) to a radio manager 110, so that radio area connection or connecting (at step S102) is performed between the terminal 200 and the radio network control apparatus 100, which leads to a handover completion.

Thereafter, the call controllers 203 and 101 respectively in the mobile terminal 200 and the radio network control apparatus 100 perform radio area connection monitoring (at steps S103 and S104) mutually. Concurrently, a handover history of the mobile terminal 200 is updated (at step S105) by setting position information and time information at the time of a call setup in handover history information 150 of a database DB in the radio network control apparatus 100.

When the call controller 203 in the mobile terminal 200 further performs a call setup request (at step S106) for the call controller 101 in the radio network control apparatus 100, a call setup (at step S107) is performed between the mobile terminal 200, the radio network control apparatus 100, a core network 300, and a connection destination 400. As a result, the response (at step S108) from the connecting destination 400 is returned to the mobile terminal 200 by the reverse route, leading to communications (at step S109) performed therebetween.

When a communication fault occurs during the communication where the call setup has been thus made between the mobile terminal 200 and a base station (not shown) controlling an area where the terminal 200 is located, and the communication between the mobile terminal 200 and the radio network control apparatus 100 is disconnected (at step S110), the call controller 203 in the mobile terminal 200 performs a radio disconnection notification (at step S111) to a reconnecting portion 202, and the call controller 101 in the radio network control apparatus 100 performs the radio disconnection notification (at step S112) to the manager 110. Thus, a radio area release (at step S113) is performed between the mobile terminal 200 and the radio network control apparatus 100.

Timer setting (at steps S114 and S115) is preliminarily performed in the reconnecting portion 202 in the mobile terminal 200 and the radio manager 110 in the radio network control apparatus 100, in order to avoid an annoyance of a re-calling procedure by a user, after the radio area is thus released. Therefore, the mobile terminal 200 repeatedly performs a reconnection request (at step S117) only for the period thus set by the timer, so that the radio area connection (at step S118) between the mobile terminal 200 and the radio network control apparatus 100 is executed.

Thereafter, the timer is stopped (at steps S119 and S120) in both of the mobile terminal 200 and the radio network control apparatus 100, which leads to a recovery of the communication state (at step S121).

Thus, the time (reconnection time) for performing a transmission for the reconnection request by the mobile terminal is fixedly set on a mobile network side, i.e. the radio network control apparatus side.
However, there have been proposed apparatuses in which a user can change the reconnection time on the mobile terminal side (see e.g. patent document 1) and a user can change the reconnection time on the mobile terminal side depending on a mobile speed of the mobile terminal (see e.g. patent document 2).
[ Patent document 1 ] Japanese Patent Application Laid-open No.2002-44732
[ Patent document 2 ] Japanese Patent Application Laid-open No.2005-73154

As mentioned above, while the reconnection time is fixedly set on the mobile network side in the prior art reconnection control system, the reconnection time can be changed by a user on the mobile terminal side or can be changed depending on a mobile speed of the mobile terminal.

While whether or not the reconnection is succeeded greatly depends on a position state and a congestion state of the base station (cell) where the mobile terminal is located or a peripheral base station (cell) in a moving direction of the mobile terminal, the reconnection time of the mobile network and the mobile terminal can not be dynamically changed depending on the position state and the congestion state.

Furthermore, when a radio wave state is dynamically changed as in the case of moving, and even when the radio wave state improves so that communication can be maintained if the mobile terminal further moves for several seconds, the reconnection will fail so that the communication will be disconnected if the reconnection time is set shorter than a time until the radio wave state improves.

Also, when the base station to which the mobile terminal is connected changes as in the case of moving, and even when the reconnection fails since a resource shortage of a base station (cell) of a moving destination occurs or the moving destination corresponds to a non-service area without the base station of the moving destination, the reconnection process is executed without fail for the reconnection time, with the result that the mobile network keeps the resources.

Also, even when it can be predicted that the reconnection causes a congestion of the base station of the moving destination while numerous users are moving at once, all of the mobile terminals are to disadvantageously perform the reconnection without fail for the reconnection time.

### Summary of the Invention

It is accordingly desirable to provide a reconnection control method and device for mobile terminal by which an optimum reconnection time can be automatically changed according to various states.

According to an embodiment of a first aspect of the present invention, there is provided a reconnection control method for mobile terminal (or device) comprising: a first step of (or means) managing a handover history of a mobile terminal; a second step of (or means) predicting a next handover destination cell of the mobile terminal based on the handover history; and a third step of (or means) changing, when it is detected that the predicted handover destination cell corresponds to a radio wave-faulted area, a predetermined reconnection time for the mobile terminal.

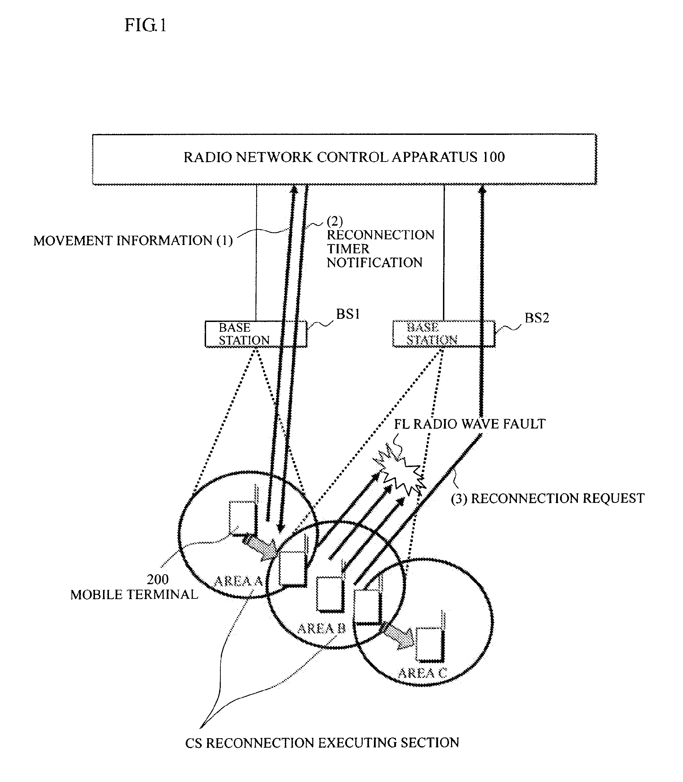

An embodiment of the present invention as mentioned above will now be described referring to a principle diagram shown in Fig. 1.

Firstly, when a handover of a mobile terminal 200 from a certain cell to another cell in an area A is performed, a radio network control apparatus 100 may receive handover information (1) through a base station BS1 to update handover history information.

The radio network control apparatus 100 predicts the next handover destination cell of the mobile terminal 200 from the above-mentioned handover history. When detecting that the handover destination cell thus predicted corresponds to an area B which has a radio wave fault FL, the radio network control apparatus 100 changes a predetermined reconnection time (timer value) for the mobile terminal 200 to be notified (2).

Accordingly, when entering the fault area B from the communicating area A, the mobile terminal 200 preferably can not perform communication in the area B since the predetermined reconnection time is set shorter or longer than a standard value depending on a cause of the radio wave fault in the area B. Therefore, the reconnection time at the time when a reconnection request (3) is made to the radio network control apparatus 100 through a base station BS2 may become shorter or longer than the standard value.

When receiving the reconnection request (3) from the mobile terminal 200 before the timeout of the reconnection time, the radio network control apparatus 100 preferably maintains the call set up. After the timeout of the reconnection time, the radio network control apparatus 100 preferably releases resources which have been used for the mobile terminal 200, so that the mobile terminal 200 stops the transmission of the reconnection request to release the resources.

At the above-mentioned third step (or means), when the radio wave-faulted area is a non-service area where any cell is not mounted, the predetermined reconnection time may be reduced.

Namely, when the state where the reconnection can not be performed is predicted, the reconnection time may be preset short, thereby enabling the resources of the radio network control apparatus and the mobile terminal to be earlier released and effectively used.

Also, at the above-mentioned third step (or means), when the radio wave-faulted area is a temporary radio wave-faulted area, the predetermined reconnection time may be extended.

Namely, when it is predicted that the radio wave-faulted area B shown in Fig. 1 corresponds to a tunnel etc., and the communication recovers if the mobile terminal moves to the area C, a repetition of an unnecessary re-calling can be avoided by presetting the reconnection time longer.

Also, at the above-mentioned third step (or means), when the radio wave-faulted area is a congestion area, the predetermined reconnection time may be reduced.

Namely, even when the probability of reconnection is predicted to be low due to a resource congestion, the reconnection time may be reduced, so that the resources are earlier released.

Also, at the above-mentioned first step (or means), handover histories of a plurality of mobile terminals may be managed, the second step (or means) may include a step of (or means) predicting, when the next handover destination cell is predicted from the handover history, a collective movement of the mobile terminals of the next handover destination cell, and the third step (or means) may include a step of (or means) changing, when it is determined based on a resource state of the next handover destination cell that resources required for reconnection of all of the mobile terminals of the collective movement can not be secured, the predetermined reconnection time per mobile terminal.

Namely, even when a collective movement of the mobile terminals is predicted, an optimum reconnection time may be selected per mobile terminal so that all of the mobile terminals in the collective movement can secure resources, thereby realizing an effective use of the resources.

Also, the reconnection control method for mobile terminal (or device) may further comprise a fourth step of (or means) holding, when a reconnection is unable to be performed even after the above-mentioned predetermined reconnection time has elapsed, a reconnection failure frequency per cell, and of extending, when the reconnection failure frequency has exceeded a first threshold, the reconnection time of the handover destination cell to be held per cell, the second step (or means) may include a step of (or means) making, when the reconnection failure frequency, held at the fourth step (or means), of the handover destination cell predicted has exceeded the first threshold, the reconnection time per cell a reconnection time of the mobile terminal.

Namely, by managing a reconnection failure frequency, it may become possible to set an optimum reconnection time to the mobile terminal based on the history of the past reconnection time.

It is to be noted that the above-mentioned fourth step (or means) may include a step of (or means) reducing, when the reconnection failure frequency has exceeded a second threshold larger than the first threshold, the reconnection time of the handover destination cell to be held per cell.

According to an embodiment of a second aspect of the present invention, there is provided a reconnection control method for mobile terminal (or device) comprising: a first step of (or means) detecting a type of an incoming/outgoing call of a mobile terminal upon call connection operation; and a step of (or means) changing a predetermined reconnection time for the mobile terminal according to the type.

Namely, while in case of an outgoing call, the communication can be performed with comparative ease by another outgoing call, in case of an incoming call, there is a possibility that another communication can not be performed, so that the reconnection time can be appropriately selected.

In a reconnection control system of the mobile radio system, embodying the present invention, an optimum reconnection time depending on various states such as a position state of a user, a position state and a congestion state of the base station (cell) can be dynamically predicted and changed, whereby the communication is continued as long as possible if it can be continued and annoyance of user's re-calling procedure can be avoided, thereby enabling smooth communication services to be provided.

Also, when the communication can not be maintained, the resources of the mobile network may be immediately released, so that the resources of the base station where the mobile station is located can be effectively used. Therefore, the congestion of the base station may be reduced, and a stable service as the mobile radio system can be provided.

### Brief Description of the Drawings

The above and other objects and advantages of embodiments of the invention will be apparent upon consideration of the following detailed description, taken in conjunction with the accompanying drawings, in which the reference numerals refer to like parts throughout and in which:
Fig.1 is a block diagram illustrating a principle of a reconnection control method and device for mobile terminal according to the present invention;
Fig.2 is a block diagram showing a system used for a reconnection control method and device for mobile terminal according to the present invention, and in particular an arrangement of a radio network control apparatus and a mobile terminal specifically;
Fig.3 is a block diagram showing a table example of handover history information shown in Fig.2;
Fig.4 is a block diagram showing a table example of peripheral cell information in a database of the base station shown in Fig.2;
Fig.5 is a processing sequence diagram of an embodiment (1) of the present invention;
Fig.6 is an operation illustrating diagram of an embodiment (1);
Fig.7 is a processing sequence diagram of an embodiment (2) of the present invention;
Fig.8 is an operation illustrating diagram of an embodiment (2);
Fig.9 is a processing sequence diagram of an embodiment (3) of the present invention;
Fig.10 is a processing sequence diagram of an embodiment (4) of the present invention;
Fig.11 is a processing sequence diagram of an embodiment (5) of the present invention;
Fig.12 is a processing sequence diagram of an embodiment (6) of the present invention; and
Fig.13 is a general sequence diagram from a call setup to a reconnection.

### Description of the Embodiments

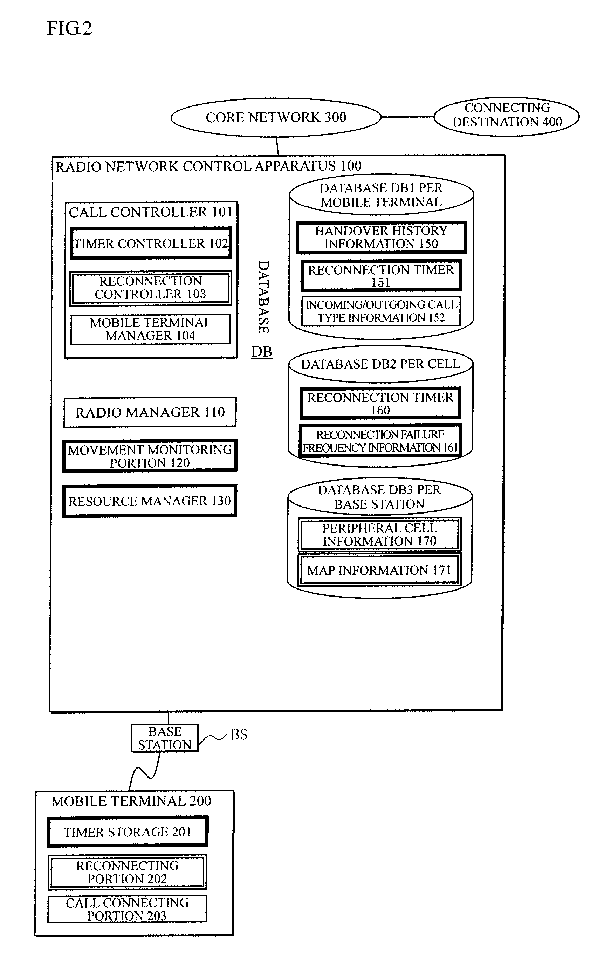

### · Arrangement common to each embodiment: Figs.2-4

Fig.2 specifically shows the radio network control apparatus 100 and the mobile terminal 200 in the system shown in Fig.1.

The radio network control apparatus 100 is composed of a call controller 101 for controlling a call connection of the mobile terminal 200, a radio manager 110 for managing a transmission/reception of a radio signal with the mobile terminal 200, a movement monitoring portion 120 for monitoring a movement state of the mobile terminal 200, a resource manager 130 for managing resources of the radio network control apparatus 100 itself, and a database DB.

Also, the call controller 101 is composed of a timer controller 102 for controlling a reconnection timer, a reconnection controller 103 for detecting a disappearance of the radio signal and controlling the reconnection, and a mobile terminal manager 104 for managing call information and a call state.

Also, the database DB includes a database DB1 per mobile terminal, a database DB2 per cell, and a database DB3 of a base station respectively in the form of table. The database DB1 is composed of handover history information 150, a reconnection timer 151, and incoming/outgoing call type information 152. The database DB2 is composed of a reconnection timer 160 and a reconnection failure frequency information 161. The database DB3 is composed of peripheral cell information 170 and map information 171.

Also, the mobile terminal 200 is similarly composed of a timer storage 201 for storing the reconnection timer, a reconnecting portion for controlling the reconnection, and a call connecting portion 203 for performing a call connection control with the radio network control apparatus 100.

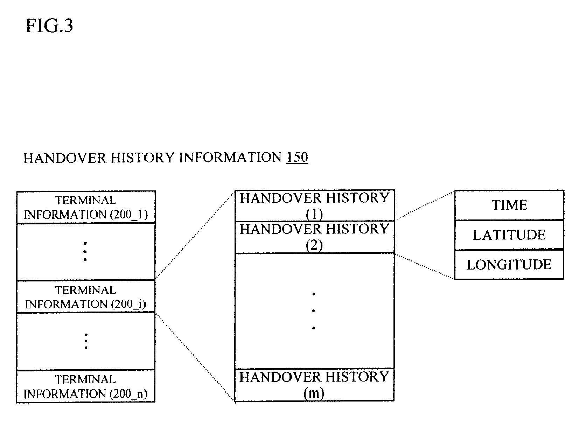

Fig.3 shows a table example of the handover history information 150 in the above-mentioned database DB1. In this example, when "n" units of mobile terminals exist, plural pieces of terminal information 200_1-200_n respectively for the mobile terminals are stored, and handover histories (1)-(m) are respectively stored in the plural pieces of terminal information. Each handover history is composed of "time", "latitude", and "longitude".

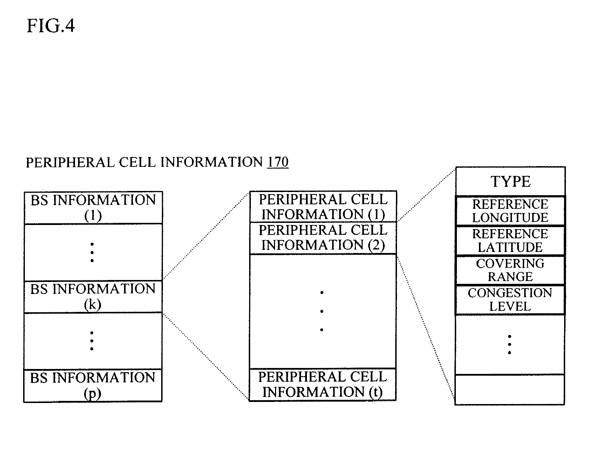

Furthermore, Fig.4 shows a table example of the peripheral cell information 170 in the database DB3 of the base station. In the peripheral cell information 170, plural pieces of base station BS information (1)-(p) corresponding to "p" units of base stations are stored, and plural pieces of peripheral cell information (1)-(t) are respectively stored in each base station information. In each peripheral cell information, "type", "reference longitude", "reference latitude", "covering range", and "congestion level" are stored.

Hereinafter, processing sequences of embodiments (1)-(6) of the reconnection control method and device for mobile terminal according to the present invention will be sequentially described with the above-mentioned arrangements.

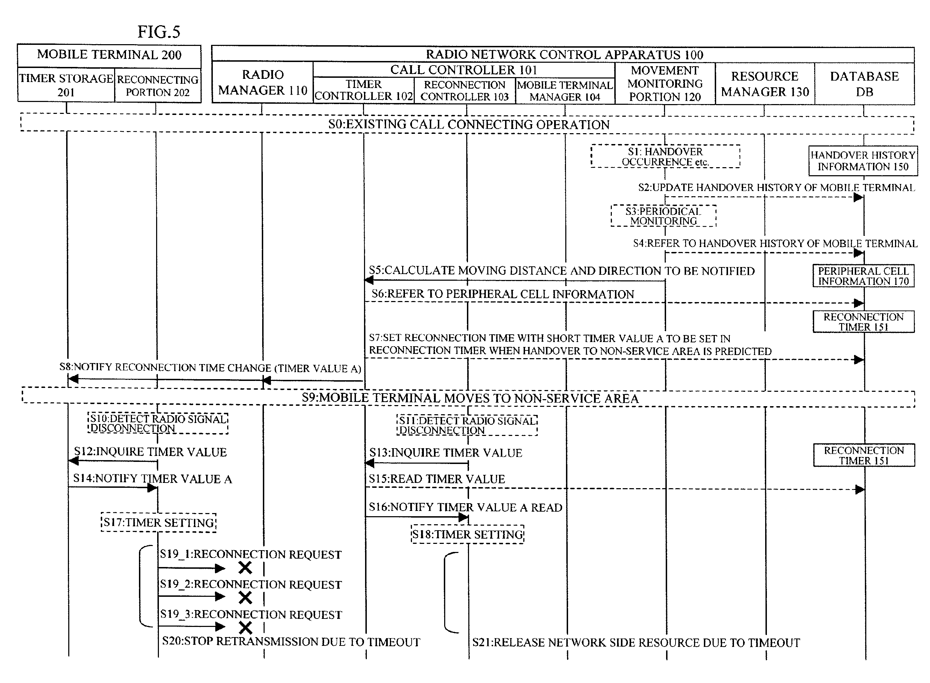

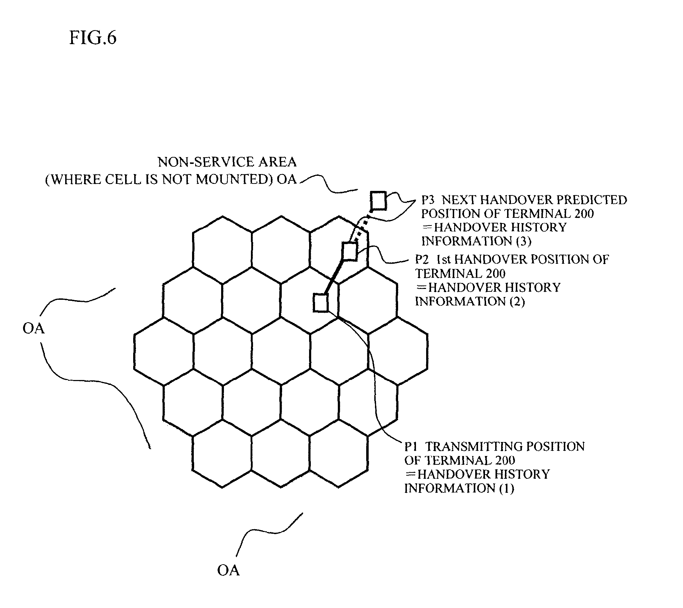

### · Processing sequence of embodiment (1): Figs.5 and 6

When a call connection is generated in the radio network system (at step S0) and an event such as handover arises (at step S1), the movement monitoring portion 120 updates the handover history information 150 in the database DB1 per mobile terminal (at step S2).

As shown in Fig.3, it is made possible to store a plurality of handover histories (handover time and handover longitude/latitude) per mobile terminal in the handover history information 150, so that the handover history is stored every time the handover is performed.

Accordingly, as shown in Fig.6, at a position P1 where the mobile terminal 200 firstly transmits a signal, the transmitting time and position information (latitude/longitude) are stored in the handover history (1). Thereafter, at the position P2 after the first handover, a handover execution time and the position information (longitude/latitude) are stored in the handover history (2). Then, the handover history is sequentially stored every time the handover is executed until the call is released.

The movement monitoring portion 120 periodically monitors the handover history information of the mobile terminal 200 (at step S3). The movement monitoring portion 120 refers to the handover history information 150 from the database DB1 per mobile terminal (at step S4), and calculates a moving distance and direction of the mobile terminal 200 to be notified to the timer controller 102 (at step S5). Namely, in the example of Fig.6, the movement monitoring portion 120 calculates the moving distance and direction between the positions P1 and P2 based on the handover history information (1) and (2) to be notified.

The timer controller 102 having received such a notification calculates a handover destination cell predicted for the next handover. Namely, as shown in Fig.6, based on the handover history information (2) at the position P2 where the mobile terminal 200 performed the first handover from the handover history information (1) at the transmitting position P1 of the mobile terminal 200, handover history information (prediction information) (3) related to the position P3 predicted for the next handover is acquired.

Also, the timer controller 102 refers to the peripheral cell information 170 from the database DB3 of the base station (at step S6) to determine whether or not the next handover destination cell of the mobile terminal 200 corresponds to a non-service area. Namely, when the handover history information (3) at the next handover-predicted position P3 shown in Fig.6 indicates the non-service area OA where any cell is not mounted, the reconnection time is changed to a timer value A shorter than a standard timer value, so that the timer value A is set in the reconnection timer 151 in the database DB1 per mobile terminal (at step S7).

Concurrently, the timer controller 102 transmits a change notification (timer value A) of the reconnection time to the timer storage 201 of the mobile terminal 200 through the radio manager 110 (at step S8).

Thereafter, when the mobile terminal 200 moves to the non-service area OA (at step S9), the reconnecting portion 202 in the mobile terminal 200 detects an extinction (disconnection) of the radio signal (at step S10). Concurrently, the reconnection controller 103 in the call controller 101 in the radio network control apparatus 100 detects the radio signal disconnection (at step S11).

The reconnecting portion 202 in the mobile terminal 200 inquires of the timer storage 201 about the timer value (at step S12). The reconnection controller 103 in the radio network control apparatus 100 also inquires of the timer controller 102 about the timer value (at step S13).

In response, the timer storage 201 in the mobile terminal 200 notifies the timer value A to the reconnecting portion 202 (at step S14). In the radio network control apparatus 100, the timer controller 102 reads the timer value A from the reconnection timer 151 (at step S15), and notifies the timer value A read to the reconnection controller 103 (at step S16).

In the mobile terminal 200, the reconnecting portion 202 performs timer setting (at step S17), and repeats a reconnection request (at steps S19_1-S19_3) until the timer value A is expired (timeout). When the timer value A times out, the reconnection request is stopped (at step S20).

Meanwhile, the timer setting has been performed (at step S18) in the radio network control apparatus 100, whereby the resources on the mobile network side are released when the timer value A times out (at step S21).

It is to be noted that when the handover is executed repeatedly, the next handover destination cell may be calculated based on the average of the moving distances/directions over several times.

Thus, when the handover destination cell corresponds to the non-service area, the reconnection time is set short and the unnecessary reconnection time request is eliminated, thereby enabling the resources to be effectively used in the mobile terminal 200 and the radio network control apparatus 100.

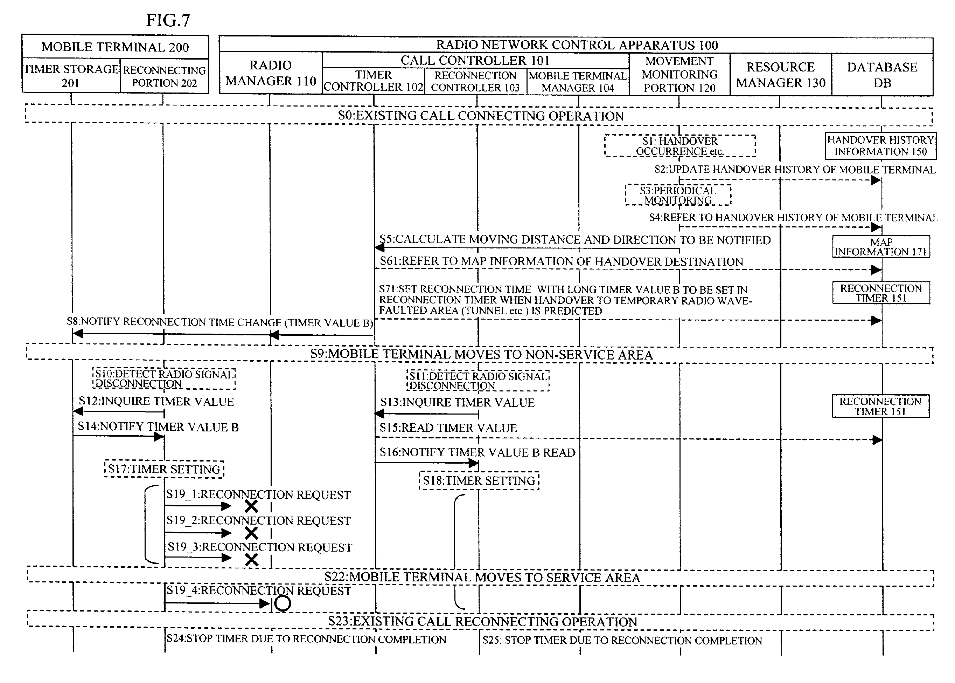

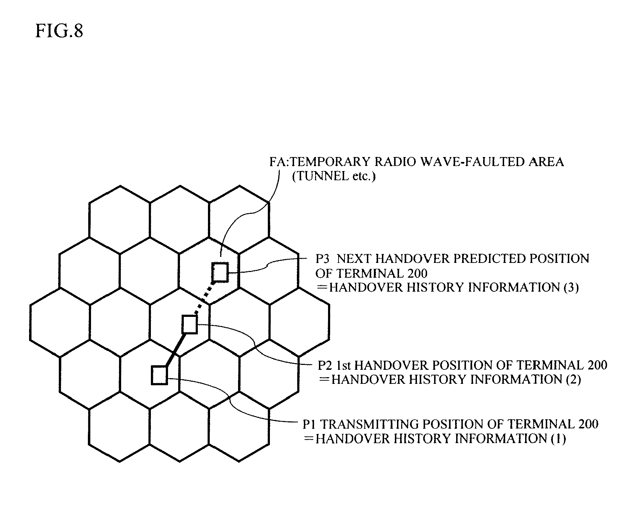

### • Processing sequence of embodiment (2): Figs. 7 and 8

The processing sequence of the embodiment (2) shown in Fig.7 is different from the processing sequence of the embodiment (1) shown in Fig. 5 in that step S61 is substituted for step S6, step S71 is substituted for step S7, and steps S19_4 and S22-S25 are added. Other steps are the same as the case of Fig. 5, so that only the above-mentioned steps will now be described.

At step S5, the timer controller 102 calculates the handover destination, in the same way as the above-mentioned embodiment (1), based on the moving distance and direction notified from the movement monitoring portion 120, and reads the map information of the handover destination from the map information 171 (at step S61).

Fig.8 shows an operation illustrating diagram at this time. When it is found from the map information that the handover destination cell of the predicted position P3 for the mobile terminal 200 corresponds to a temporary radio wave-faulted area FA such as a tunnel, the reconnection time is now changed to a timer value B longer than the standard timer value to be set in the reconnection timer 151 (at step S71). Also, the timer value B is notified to the timer storage 201 in the mobile terminal 200 to be set (at step S8).

When it is determined at step S71 that the next handover destination cell does not correspond to the radio wave-faulted area, the reconnection timer value is set with the standard value.

Thereafter, the same operation as the processing sequence of the above-mentioned embodiment (1) is performed through steps S9-S18, and then the mobile terminal 200 moves to the service area (at step S22). Since the timer value set steps S17 and S18 is the timer value B longer than the standard timer value, the reconnection request is executed thereafter (at step S19_4). Together with this reconnection request, the known reconnection operation is executed (at step S23).

As a result, reconnection has been completed, so that the timer stop is performed in the mobile terminal 200 and the radio network control apparatus 100 (at steps S24 and S25).

Thus, by continuing the reconnection request even if the temporary radio signal disconnection state is predicted, a re-calling frequency can be reduced.

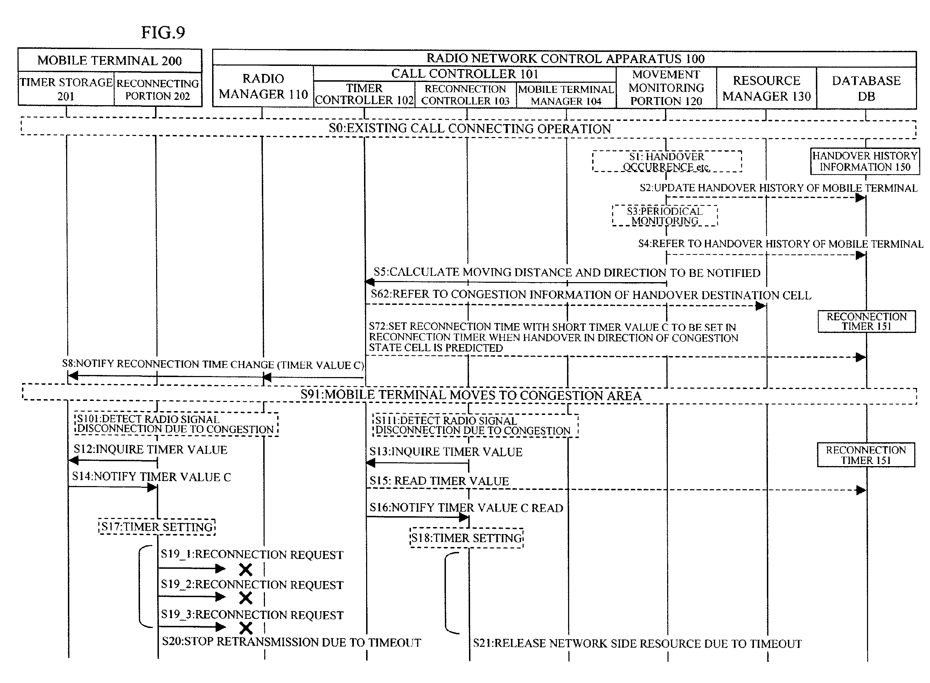

### • Processing sequence of embodiment (3): Fig. 9

Upon comparing the processing sequence of the embodiment (3) shown in Fig.9 with that of the above-mentioned embodiment (1) shown in Fig.5, step S62 is substituted for step S6, step S72 is substituted for step S7, and steps S91, S101, and S111 are substituted for steps S9, S10, and S11 respectively. Hereinafter, only these steps will be described.

The timer controller 102 to which the moving distance and direction are notified from the movement monitoring portion 120 calculates the handover destination cell as mentioned above, and inquires of the resource manager 130 about the congestion state of the handover destination cell (at step S62).

As a result, when the predicted handover destination cell of the mobile terminal 200 corresponds to an area in the congestion state, the reconnection time is changed to a time value C shorter than the standard value to be stored in the reconnection timer 151 (at step S72). Concurrently, the timer value C is notified from the radio manager 110 to the timer storage 201 of the mobile terminal 200 (at step S8).

Thereafter, when the mobile terminal 200 moves to the congestion area (at step S91), the reconnecting portion 202 in the mobile terminal 200 and the reconnection controller 103 of the call controller 101 in the radio network control apparatus 100 detect the radio signal disconnection due to the congestion (at steps S101 and S111).

Thereafter, the reconnection request is performed by the timer setting with the timer value C through steps S12-S18 as mentioned above (at steps S19_1-S19_3), the retransmission is stopped due to the timeout when the reconnection request is not received during the timer value C (at step S20). In the radio network control apparatus 100, the resources on the network side are released due to the timeout with the timer value C (at step S21).

Thus, the time for the reconnection request due to the resource congestion is reduced, and resources having been used for the communication between the mobile terminal 200 and the radio network control apparatus 100 are earlier released, thereby realizing an effective use of the resources.

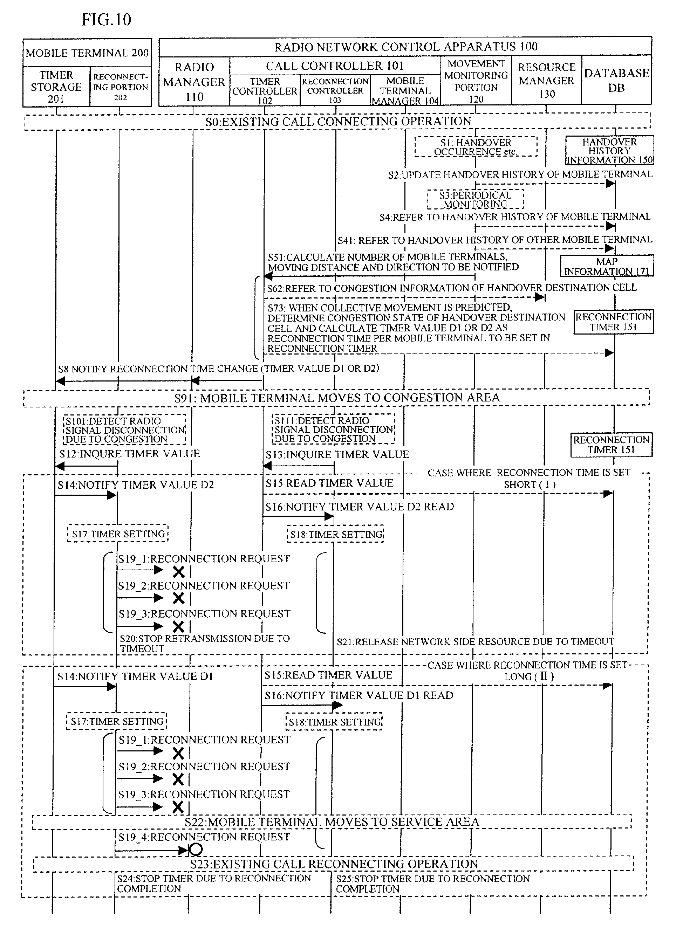

### • Processing sequence of embodiment (4): Fig.10

The processing sequence of the embodiment (4) shown in Fig.10 is different from the processing sequence of the embodiment (3) shown in Fig.9 in that step S73 is substituted for step S72, steps S14-S21 are provided in both of a case (I) where the reconnection time is set short and a case (II) where the reconnection time is set long, the reconnection request of steps S19_4 is performed, and steps S22-S25 are added in the same way as the embodiment (2) in Fig.7.

Through steps S1-S3, when the movement monitoring portion 120 refers to the handover history of the mobile terminal 200 from handover history information 150 in the database DB1 at step S4, it concurrently refers to the handover history of not only the mobile terminal 200 itself but also other mobile terminals (at step S41).

When a plurality of mobile terminals have the same handover history information, the movement monitoring portion 120 regards the movement as a collective movement, and notifies to the timer controller 102 the number of mobile terminals together with the moving distance and direction (at step S51).

The timer controller 102 having received the notification predicts the handover destination cell as mentioned above, and refers to the congestion information of the predicted handover destination cell by the resource manager 130 (at step S60). The congestion state of the handover destination is determined where the collective movement is predicted, a timer value D1 longer than the standard timer value or a timer value D2 shorter than the standard timer value is set as the reconnection time per mobile terminal to be set in the reconnection timer 151 (at step S73). Also, the timer value D1 or D2 is notified to the timer storage 201 of the mobile terminal 200 through the radio manager 110 (at step S8).

In this case, according to the degree of a resource shortage, the timer value D1 longer the standard timer value is set to the part of the mobile terminals, and the timer value D2 shorter than the standard timer value is set to the other mobile terminals, thereby securing the resources of all of the mobile terminals in the collective movement. In some cases, the shorter timer value D2 has to be set to all of the mobile terminals. When the resources are sufficient, the timer value may remain the standard timer value.

Through steps S91, S101, S111, S12, and S13, when the reconnection time is set with the shorter timer value D2, the operation of case (I) is executed.

Namely, in this case, the same steps as those of the processing sequence of the embodiment (1) shown in Fig.5 are executed at steps S14-S21.

Also, in case of (II) where the reconnection time is set with the longer timer value D1, steps S14-S18, S19_1-S19_4, and S22-S25 are also executed in the same way as the processing sequence of the embodiment (2) shown in Fig.7.

Thus, the longer reconnection time is set to the part of the mobile terminals in the collective movement where resource securement is determined to be possible, and a shorter reconnection time is set to the other mobile terminals where the resource securement is determined to be impossible.

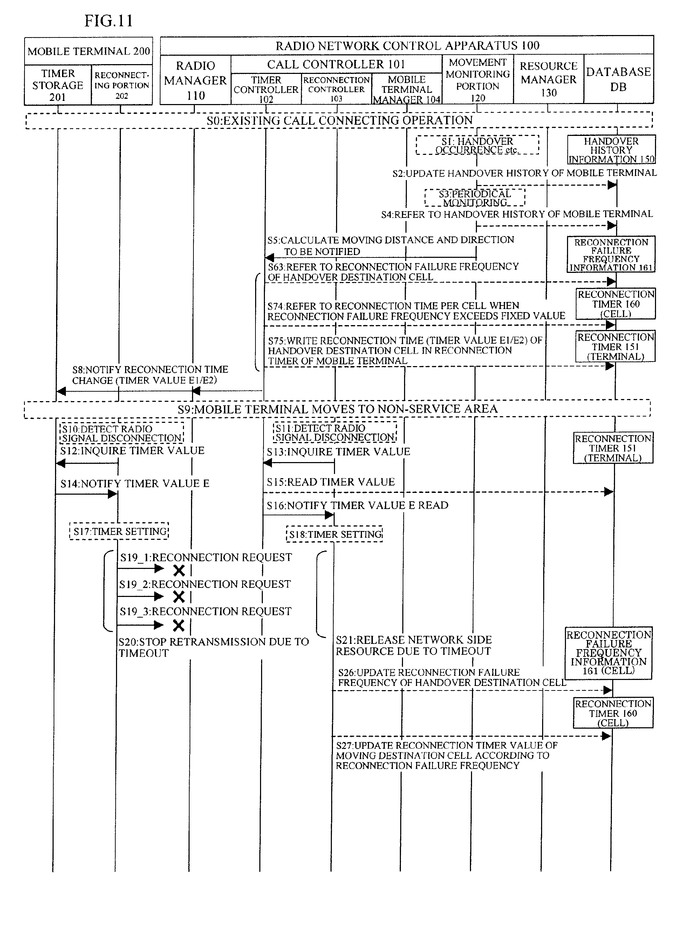

### • Sequence of embodiment (5): Fig.11

The processing sequence of the embodiment (5) shown in Fig.11 is different from the processing sequence of the embodiment (1) shown in Fig.5 in that step S63 is substituted for step S6, steps S74 and S75 are substituted for step S7, and steps S26 and S27 are used.

In the embodiment (5), the number of times when the reconnection of the handover destination cells fails at steps S20 and S21 in the same way as e.g. the embodiment (1) mentioned above is stored in the reconnection failure frequency information 161 of the database DB2 per cell (at step S26).

When the above-mentioned reconnection failure frequency is equal to or more than a fixed threshold Th1, it is supposed that a temporary fault is occurring in the handover destination cell, so that the reconnection controller 103 changes the reconnection timer 160 per cell to a timer value E1 longer than the standard value. Also, when the reconnection failure frequency exceeds a threshold Th2 which is larger than the above-mentioned threshold Th1 (Th2>Th1), it is supposed that a permanent fault is occurring in the handover destination cell, so that the reconnection timer 160 is updated to a short timer value E2 (at step S27).

Thereafter, when the handover destination is predicted through steps S1-S5 as mentioned above, the timer controller 102 refers to the connection failure frequency of the handover destination cell from the reconnection failure frequency information 161 of the database DB2 (at step S63). When the reconnection failure frequency exceeds the fixed value Th1, the reconnection time per cell is read from the reconnection timer 160 (at step S74).

As a result, the reconnection time timer value E1 or E2 of the handover destination cell is set in the reconnection timer 151 per mobile terminal (at step S75), and is notified to the timer storage 201 of the mobile terminal 200 through the radio manager 110 (at step S8).

Thus, the fault is determined to be a temporary fault or a permanent fault based on the reconnection failure frequency, so that the reconnection time is changed.

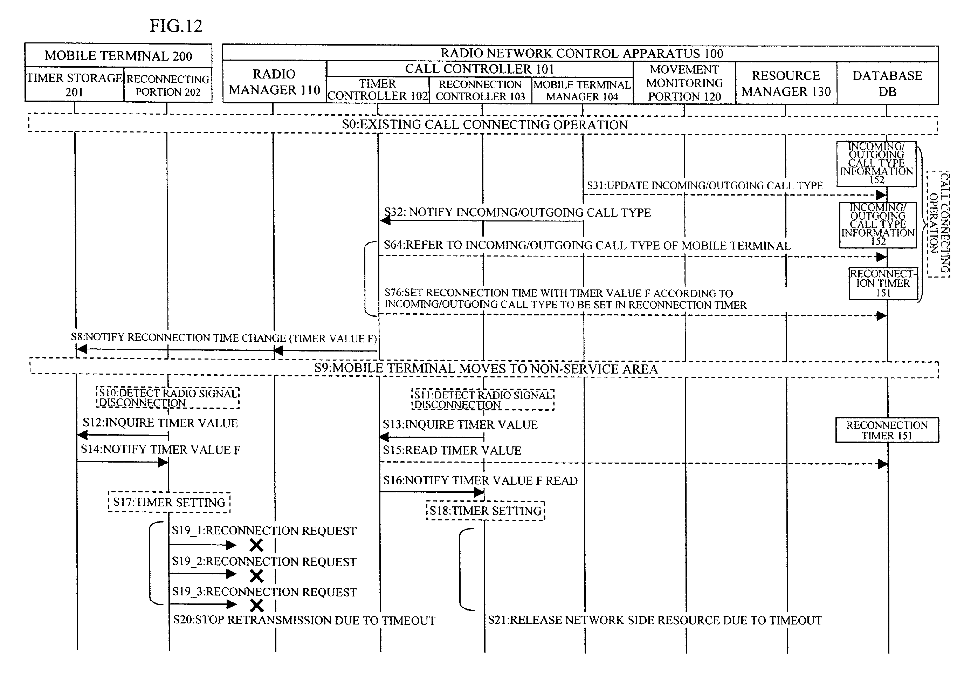

### • Processing sequence of embodiment (6): Fig. 12

The processing sequence of the embodiment (6) shown in Fig.12 is different from the embodiment (1) shown in Fig.5 in that steps S1-S5 are eliminated, steps S31 and S32 are added instead of steps S1-S5, step S64 is substituted for step S6, and step S76 is substituted for step S7.

In the case of the embodiment (6), firstly, the mobile terminal manager 104 updates the incoming/outgoing call type information 152 of the database DB2 per mobile terminal upon receiving an outgoing call or incoming call (at step S31). The type of the incoming/outgoing call is notified to the timer controller 102 (at step S32).

The timer controller 102 having received this notification refers to the incoming/outgoing call type information 152 (at step S64), and sets the reconnection time with a timer value F1 or F2 according to the incoming/outgoing call type to be set in the reconnection timer 151 (at step S76). Also, the reconnection time change is notified to the timer storage 201 in the mobile terminal 200 through the radio manager 110 (at step S8).

When the terminal type is the outgoing call, the communication can be performed if the outgoing call is made again, so that the timer value is set with the timer value F1 shorter than the standard value. When the terminal type is the incoming call, the communication can not be performed again in some cases, so that the timer value is changed to a longer timer value F2. Thus, more effective securement of resources can be realized.

Operation after step S9 is executed in the same way as the embodiment (1).

It is to be noted that the present invention is not limited by the above-mentioned embodiments, and it is obvious that various modifications may be made by one skilled in the art based on the recitation of the claims.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A reconnection control method for mobile terminal comprising:
a first step of managing a handover history of a mobile terminal;
a second step of predicting a next handover destination cell of the mobile terminal based on the handover history; and
a third step of changing, when it is detected that the predicted handover destination cell corresponds to a radio wave-faulted area, a predetermined reconnection time for the mobile terminal.

2. The reconnection control method for mobile terminal as claimed in claim 1, wherein the third step includes a step of reducing, when the radio wave-faulted area is a non-service area where a cell is not mounted, the predetermined reconnection time.

3. The reconnection control method for mobile terminal as claimed in claim 1 or 2, wherein the third step includes a step of extending, when the radio wave-faulted area is a temporary radio wave-faulted area, the predetermined reconnection time.

4. The reconnection control method for mobile terminal as claimed in claim 1, 2 or 3, wherein the third step includes a step of reducing, when the radio wave-faulted area is a congestion area, the predetermined reconnection time.

5. The reconnection control method for mobile terminal as claimed in any preceding claim, wherein the first step manages handover histories of a plurality of mobile terminals, the second step includes a step of predicting, when the next handover destination cell is predicted from the handover history, a collective movement of the mobile terminals of the next handover destination cell, and the third step includes a step of changing, when it is determined based on a resource state of the next handover destination cell that a resource required for reconnection of all of the mobile terminals of the collective movement can not be secured, the predetermined reconnection time per mobile terminal.

6. The reconnection control method for mobile terminal as claimed in any preceding claim, further comprising a fourth step of holding, when a reconnection is unable to be performed even after the predetermined reconnection time has elapsed, a reconnection failure frequency per cell, and of extending, when the reconnection failure frequency has exceeded a first threshold, the reconnection time of the handover destination cell to be held per cell, the second step including a step of making, when the reconnection failure frequency, held at the fourth step, of the handover destination cell predicted has exceeded the first threshold, the reconnection time per cell a reconnection time of the mobile terminal.

7. The reconnection control method for mobile terminal as claimed in claim 6, wherein the fourth step includes a step of reducing, when the reconnection failure frequency has exceeded a second threshold larger than the first threshold, the reconnection time of the handover destination cell to be held per cell.

8. A reconnection control method for mobile terminal comprising:
a first step of detecting a type of an incoming/outgoing call of a mobile terminal upon call connection operation; and
a step of changing a predetermined reconnection time for the mobile terminal according to the type.

9. A reconnection control device for mobile terminal comprising :
a first means managing a handover history of a mobile terminal;
a second means predicting a next handover destination cell of the mobile terminal based on the handover history; and
a third means changing, when it is detected that the predicted handover destination cell corresponds to a radio wave-faulted area, a predetermined reconnection time for the mobile terminal.

10. The reconnection control device for mobile terminal as claimed in claim 9, wherein the third step includes a means reducing, when the radio wave-faulted area is a non-service area where a cell is not mounted, the predetermined reconnection time.

11. The reconnection control device for mobile terminal as claimed in claim 9 or 10, wherein the third step includes a means extending, when the radio wave-faulted area is a temporary radio wave-faulted area, the predetermined reconnection time.

12. The reconnection control device for mobile terminal as claimed in claim 9, 10 or 11, wherein the third step includes a means reducing, when the radio wave-faulted area is a congestion area, the predetermined reconnection time.

13. The reconnection control device for mobile terminal as claimed in any of claims 9 to 12, wherein the first step manages handover histories of a plurality of mobile terminals, the second step includes a means predicting, when the next handover destination cell is predicted from the handover history, a collective movement of the mobile terminals of the next handover destination cell, and the third step includes a means changing, when it is determined based on a resource state of the next handover destination cell that a resource required for reconnection of all of the mobile terminals of the collective movement can not be secured, the predetermined reconnection time per mobile terminal.

14. The reconnection control device for mobile terminal as claimed in any of claims 9 to 13, further comprising a fourth means holding, when a reconnection is unable to be performed even after the predetermined reconnection time has elapsed, a reconnection failure frequency per cell, and extending, when the reconnection failure frequency has exceeded a first threshold, the reconnection time of the handover destination cell to be held per cell, the second step including a means making, when the reconnection failure frequency, held by the fourth means
means the handover destination cell predicted has exceeded the first threshold, the reconnection time per cell a reconnection time of the mobile terminal.

15. The reconnection control device for mobile terminal as claimed in claim 14, wherein the fourth step includes a means reducing, when the reconnection failure frequency has exceeded a second threshold larger than the first threshold, the reconnection time of the handover destination cell to be held per cell.

16. A reconnection control device for mobile terminal comprising:
a first means detecting a type of an incoming/outgoing call of a mobile terminal upon call connection operation; and
a means changing a predetermined reconnection time for the mobile terminal according to the type.
